# EUROPEAN PATENT SPECIFICATION

(11) **EP 3 653 863 B1**
(45) Date of publication and mention of the grant of the patent: **15.01.2025**
(21) Application number: 18832780.3
(22) Date of filing: 12.07.2018
(51) Int. Cl.: F02F 3/00, B23K 20/12, F16J 1/01

(54) **INTERNAL COMBUSTION ENGINE PISTON AND PRODUCTION METHOD FOR SAME**
KOLBEN FÜR EINEN VERBRENNUNGSMOTOR UND HERSTELLUNGSVERFAHREN DAFÜR
PISTON DE MOTEUR À COMBUSTION INTERNE ET SON PROCÉDÉ DE PRODUCTION

(30) Priority: 14.07.2017 JP 2017138445
(43) Date of publication of application: 20.05.2020
(73) Proprietor: Nippon Steel Corporation, Tokyo 1008071 (JP)
(72) Inventor: HIRAKAMI, Daisuke, Tokyo 100-8071 (JP); YAMASHITA, Tomohiro, Tokyo 100-8071 (JP); TAKASUGA, Motoki, Tokyo 100-8071 (JP)
(74) Representative: Vossius & Partner Patentanwälte Rechtsanwälte mbB
(86) International application number: PCT/JP2018/026349
(87) International publication number: WO 2019/013287

(56) References cited:
- WO-A1-2017/022184
- WO-A1-2017/022184
- CN-A- 105 033 438
- JP-A- 2000 303 904
- JP-A- 2005 271 016
- JP-A- 2015 217 396
- JP-A- 2017 122 456
- JP-A- 2017 517 679
- JP-A- H 062 613
- JP-A- H 062 613
- JP-A- S63 138 141
- KR-A- 20160 128 067

## Description

### [Technical Field of the Invention]

The present invention relates a piston for an internal combustion engine and a manufacturing method thereof.

### [Related Art]

According to an increase in an output and a decrease in a fuel consumption of an automobile engine, a combustion temperature and a combustion pressure in a cylinder increases. Particularly, a piston for a diesel engine requires high-temperature durability. Moreover, in order to reduce power loss due to an inertial force when a piston moves upward or downward, weight reduction of the piston is required. In addition, a piston skirt portion and a cylinder are thermally expanded due to temperature rise caused by combustion, but in order to maintain a gap between the piston skirt portion and the cylinder constant, a thermal expansion coefficient of the piston skirt portion is required to be substantially the same as a thermal expansion coefficient of the cylinder.

As the piston for a diesel engine in the related art, a piston manufactured by casting an aluminum alloy such as JIS AC8A has been used to obtain the weight reduction. However, the piston formed of an aluminum alloy has a problem that a high-temperature endurance temperature thereof is as low as about 300°C.

Various pistons for an internal combustion engine as described above are proposed.

For example, Patent Document 1 proposes a piston using cast steel that forms a eutectic colony with a base microstructure of δ ferrite-martensite and a eutectic carbide in the microstructure of 3 µm or less. In a case where an integral product is manufactured by casting, the integral product can be manufactured in a near net shape, and thus, there is an advantage that a cost of machining or the like can be reduced.

However, the piston manufactured by the cast steel has a limit in reducing a thickness of the piston due to manufacturing limitations. In addition, since a material of the entire piston is steel, there is a problem that weight of the piston is large.

Further, Patent Document 2 proposes to divide a piston into upper and lower parts and forge each of the upper and lower pats in order to provide a cooling channel in a ring portion of the piston, and then to join the upper and lower parts to each other by laser so as to integrate the upper and lower parts. Here, a top head portion side of the piston is referred to as a piston upper portion, and a piston skirt side is referred to a piston lower portion.

However, a joining direction is restricted when the laser joining is performed, and thus, shapes of the upper and lower parts are restricted. Moreover, the laser joining is fusion joining, and thus, an alloy layer formed by joining an aluminum alloy and steel becomes thick. This alloy layer includes embrittlement microstructures, and thus, a thick alloy layer causes a decrease in joining strength.

Moreover, Patent Document 3 discloses a structure to achieve heat resisting properties and weight reduction of a piston. That is, steel having high heat resisting properties is used for a piston upper portion while an aluminum alloy is used for a piston lower portion to reduce weight. The piston upper portion and the piston lower portion are integrated with each other by friction welding.

However, in a piston obtained by joining steel and an aluminum alloy to each other, a load applied to a joint portion due to a reciprocating motion increases, and thus, a joining area is required to be increased. Accordingly, there is a problem that the even if joining is performed in a condition in which joining strength on an outer side far from a rotation axis of a joining surface increases during friction welding, an inner side near the rotation axis of the joining surface is not joined. Meanwhile, if joining is performed in a condition in which joining strength on the inner side close to the rotation axis of the joining surface increases during friction welding, the alloy layer on the outer side becomes thick, and thus, there is a problem that joining strength decreases. JPH062613 discloses a piston with a first portion made of steel and a second portion made of aluminium joined by friction welding.

### [Prior Art Document]

### [Patent Document]

[Patent Document 1] PCT International Publication No. WO 2004/094808
[Patent Document 1] Published Japanese Translation No. 2014-531558 of the PCT International Publication
[Patent Document 1] Japanese Unexamined Patent Application, First Publication No. 2000-303904

### [Disclosure of the Invention]

### [Problems to be Solved by the Invention]

In a case where a 4000 series aluminum alloy is used for the piston skirt portion, an expansion rate can be kept low. However, the aluminum alloy contains a large amount of Si, and thus, an oxide film adheres thickly on a surface. In addition, the 4000 series aluminum alloy has a melting point lower than those of other aluminum alloys. Therefore, in a case where the piston skirt portion is frictionally joined as in Patent Document 3, if a friction force increases to remove the oxide film, a portion of the aluminum alloy is melted, and thus, there is a problem that an intermetallic compound is generated on an interface between the steel and the aluminum alloy.

As described above, in a piston for a diesel engine, both the weight reduction of the piston for improving combustion efficiency and the high-temperature durability of the piston upper portion are required. Moreover, in order to maintain a gap between the piston skirt portion and the cylinder constant from when the diesel engine starts at a low temperature to when the diesel engine is operated at a high load at a high temperature, the piston skirt portion is required to have a low expansion rate.

In a case where the weight reduction is prioritized and the entire piston is formed of an aluminum alloy, the high-temperature fatigue properties of the piston upper portion are lowered, and thus, durability becomes a problem. Meanwhile, in a case where the durability is prioritized and the entire piston is formed of steel, weight increases, and thus, fuel efficiency decreases.

In order to solve both problems, preferably, the piston upper portion is formed of steel having excellent heat resisting properties, the piston lower portion is formed of a lightweight aluminum alloy, and the piston upper portion and the piston lower portion are solid-state welded to each other by friction welding. However, if a temperature of the friction welding increases, a thick transition layer formed of a steel-aluminum alloy is generated in a joining interface between the piston upper portion and the piston. Since the transition layer includes embrittlement microstructures, if the transition layer is thickly formed, joining strength between the piston upper portion and the piston lower portion decreases.

The technology described in Patent Document 3 has the same problem. That is, when friction welding between the piston upper portion and the piston lower portion is performed, in a case where a side near to a rotation axis in the joining surface is referred to as an inner circumferential side and a side far from the rotation axis is referred to as an outer circumferential side, even if a transition layer on the outer circumferential side has an appropriate thickness, a thickness on the inner circumferential side is insufficient, and thus, an oxide layer cannot be removed and the joining strength may decrease. Meanwhile, when the transition layer on the inner circumferential side has an appropriate thickness, the thickness on the outer circumferential side is too thick, the outer circumferential side is brittle, and thus, the joining strength may decrease.

The present invention is made in consideration of the above-described circumstances, and an object thereof is to provide a piston for an internal combustion engine having high durability and light weight and a manufacturing method thereof.

### [Means for Solving the Problem)

The present invention adopts the following aspects in order to solve the above-described problems and achieve the object.
(1) According to an aspect of the present invention, there is provided a piston for an internal combustion engine, the piston including: a first part which is formed of steel; and a second part which is joined to the first part via an annular joining layer and is formed of an aluminum alloy, in which a thickness of the joining layer is 1.0 µm to 20.0 µm on both an inner circumferential side and an outer circumferential side of the joining layer. According to the above (1), by combining the steel first part having high heat resisting properties and the aluminum alloy second part having light weight, both high durability and weight reduction can be achieved. Moreover, since both the inner circumferential side and the outer circumferential side of the joining layer are within the range of 1.0 µm to 20.0 µm, it is possible to avoid problems that the joining layer is excessively thick and is embrittle, or the joining layer is excessively thin and sufficient joining strength cannot be maintained.
(2) In the piston for an internal combustion engine according to the above (1), a difference obtained by subtracting the thickness on the inner circumferential side from the thickness on the outer circumferential side of the joining layer may be 10.0 µm or less.

In the case of the above (2), uniform joining strength can be obtained in a radial direction.

(3) According to another aspect, there is provided a manufacturing method of the piston for an internal combustion engine according to the above (1) or (2), the manufacturing method including: fixing the first part in place; performing friction heating by pressing the second part against the first part while rotating the second part; and pressing the second part against the first part after stopping the rotation of the second part to form the joining layer, in which in the performing of the friction heating, a cooling fluid is supplied to an outer circumferential surface of the second part at a position on a side of the second part from a joint position between the first part and the second part.

According to the above (3), the joining layer between the first part and the second part can be formed with the thickness within the range of 1.0 µm to 20.0 µm on both the inner circumferential side and the outer circumferential side of the joining layer. Accordingly, the second part can be joined to the first part with high joining strength.

(4) In the manufacturing method of the piston for an internal combustion engine according to the above (3), the following may be performed. That is, in the performing of the friction heating, the second part is pressede against the first part for 10.0 seconds to 60.0 seconds at a pressing force from 2.0 MPa to 20.0 MPa while rotating at a rotational speed of 1000 rpm to 2500 rpm, and in the forming of the joining layer, the second part is pressed against the first part for 1.0 second to 10.0 seconds at a pressing force which is 10.0 MPa to 50.0 MPa and is larger than the pressing force in the performing of the friction heating.

In the case of the above (4), the joining layer can be more reliably formed with an appropriate thickness.

(5) In the manufacturing method of the piston for an internal combustion engine according to the above (3) or (4), in the performing of the friction heating, a temperature of the outer circumferential surface of the second part may be 200°C to 550°C.

In the case of the above (5), the thickness on the outer circumferential side of the joining layer can be managed to a more appropriate thickness.

### [Effects of the Invention]

According to each aspect of the present invention, it is possible to provide a piston for an internal combustion engine having high durability and light weight and a manufacturing method thereof.

### [Brief Description of the Drawings]

FIG. 1 is a perspective view of a piston for an internal combustion engine according to an embodiment of the present invention.
FIG. 2A is a cross-sectional view when the piston for an internal combustion engine is taken along A-A of FIG. 1.
FIG. 2B is a cross-sectional view when the piston for an internal combustion engine is taken along B-B of FIG. 1.
FIG. 3A is a cross-sectional view when a piston upper portion of the piston for an internal combustion engine is taken along A-A of FIG. 1.
FIG. 3B is a cross-sectional view when the piston upper portion of the piston for an internal combustion engine is taken along B-B of FIG. 1.
FIG. 4A is a cross-sectional view when a piston lower portion of the piston for an internal combustion engine is taken along A-A of FIG. 1.
FIG. 4B is a cross-sectional view when the piston lower portion of the piston for an internal combustion engine is taken along B-B of FIG. 1.
FIG. 5 is an explanatory view in which a joining surface of the piston upper portion of the piston for an internal combustion engine and a joining surface of the piston lower portion thereof coaxially overlap each other.
FIG. 6 is a schematic view showing an example of a manufacturing apparatus of the piston for an internal combustion.
FIG. 7 is an enlarge view of a C portion of FIG. 6.
FIG. 8A is a flowchart showing a manufacturing method of the piston of an internal combustion engine according to the embodiment.
FIG. 8B is a flowchart showing a continuation of FIG. 8A.

### [Embodiments of the Invention]

A piston for an internal combustion engine and a manufacturing method thereof according to an embodiment of the present invention will be described below with reference to the drawings.

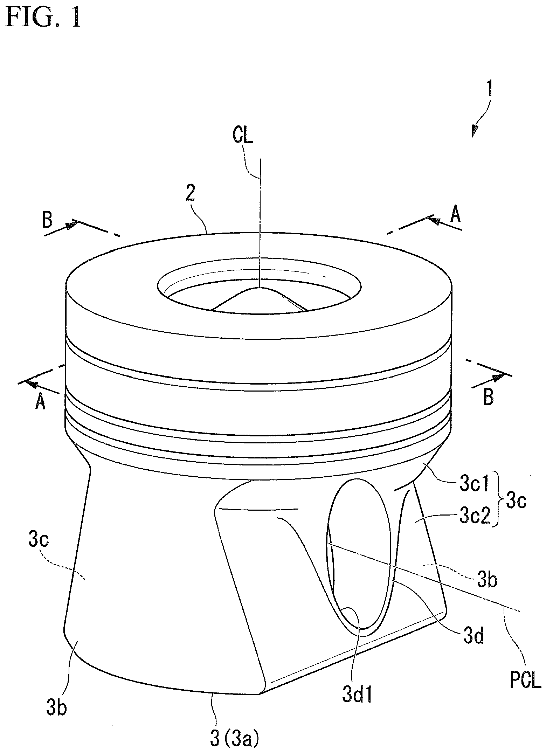

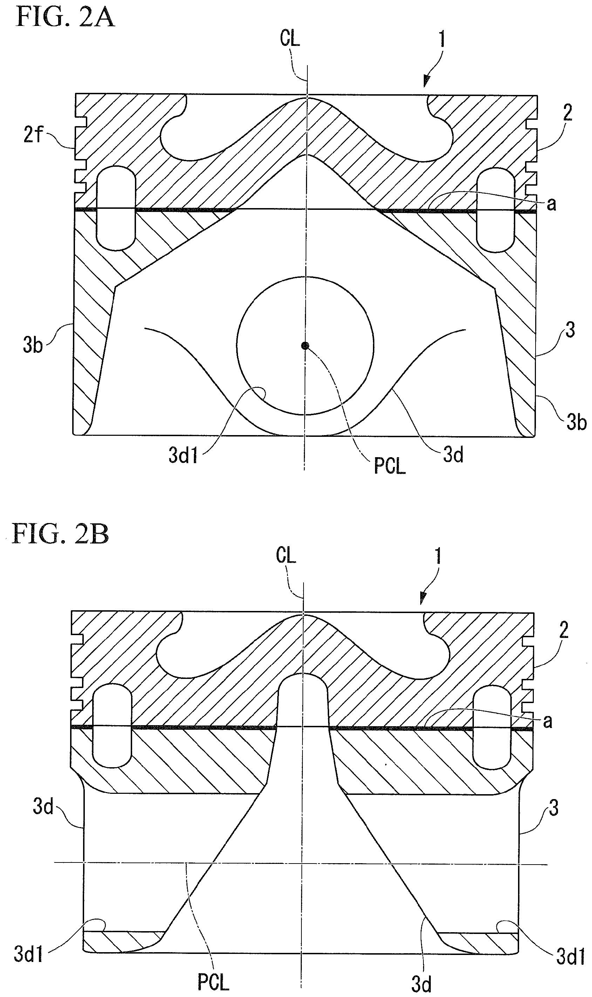

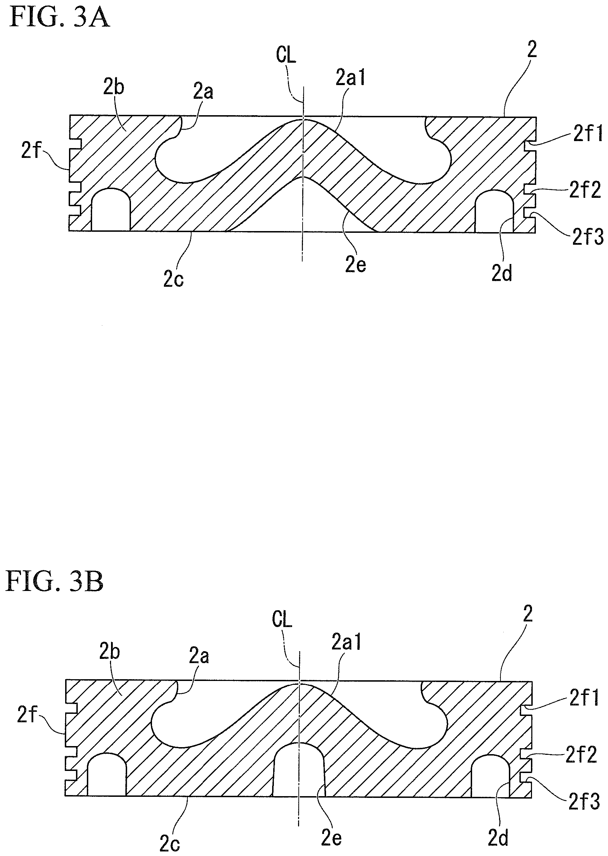

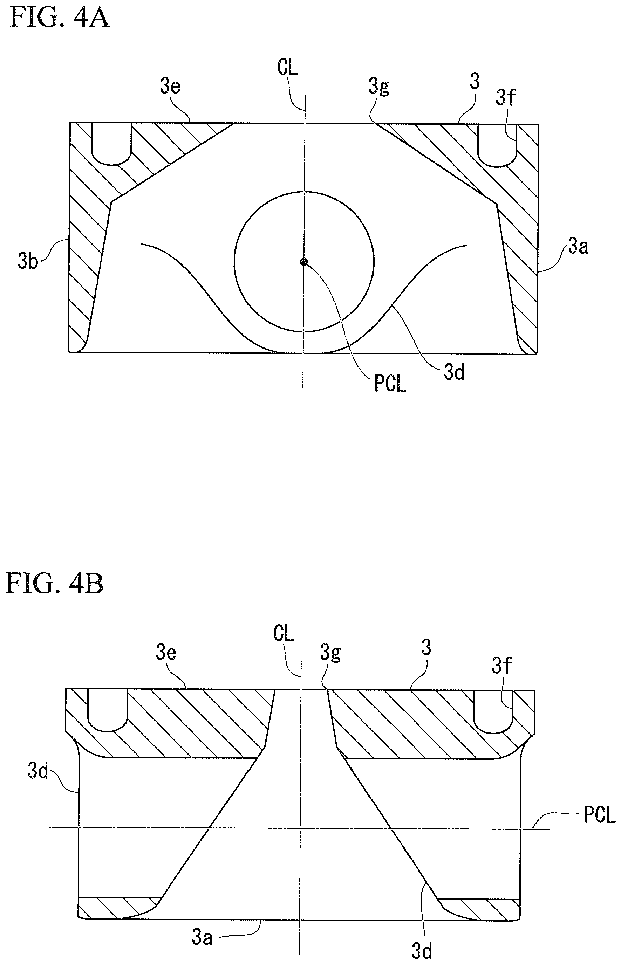

FIG. 1 is a perspective view of the piston for an internal combustion engine according to the present embodiment. FIG. 2A is a cross-sectional view when the piston for an internal combustion engine is taken along A-A of FIG. 1. FIG. 2B is a cross-sectional view when the piston for an internal combustion engine is taken along B-B of FIG. 1. FIG. 3A is a cross-sectional view when a piston upper portion of the piston for an internal combustion engine is taken along A-A of FIG. 1. FIG. 3B is a cross-sectional view when the piston upper portion of the piston for an internal combustion engine is taken along B-B of FIG. 1. FIG. 4A is a cross-sectional view when a piston lower portion of the piston for an internal combustion engine is taken along A-A of FIG. 1. FIG. 4B is a cross-sectional view when the piston lower portion of the piston for an internal combustion engine is taken along B-B of FIG. 1.

In addition, a reference symbol CL indicates a central axis of the piston 1 for an internal combustion engine.

The piston 1 for an internal combustion engine is a piston suitable for use in an automotive engine, particularly, a diesel engine.

As shown in FIGS. 1 to 2B, the piston 1 for an internal combustion engine includes a disk-shaped piston upper portion 2 (first part) and a tubular piston lower portion 3 (second part) integrally joined to a lower surface of the piston upper portion 2.

As shown in FIGS. 3A and 3B, a cavity 2a which forms a portion of a combustion chamber is formed in a top 2b constituting an upper surface of the piston upper portion 2. The cavity 2a is a substantially annular recessed part space which is formed coaxially with the central axis CL, and a central portion 2a1 of the cavity 2a protrudes upward.

In addition, a cooling channel 2d and a recess 2e are formed in a lower surface 2c constituting the joining surface of the piston upper portion 2. The cooling channel 2d is an annular flow path which is formed coaxially with the central axis CL. Moreover, the recess 2e is also formed on a rear surface side of the central portion 2a1 so as to be coaxial with the central axis CL. In the recess 2e, a cross-sectional shape when viewed in the cross section shown in FIG. 3A and a cross-sectional shape when viewed in the cross section shown in FIG. 3B are different from each other, and width dimensions in a right-left direction orthogonal to the axis CL are different from each other.

Further, a top ring groove 2fl, a second ring groove 2f2, and a third ring groove 2f3 are formed on an outer circumferential surface 2f of the piston upper portion 2 to be arranged in this order from top to bottom so as to be coaxial with the central axis CL.

As shown in FIGS. 4A and 4B, the piston lower portion 3 has a skirt portion 3a.

As shown in FIG. 1, the skirt portion 3a has a substantially tubular shape in which a portion is cut away, and includes a pair of arc outer circumferential surfaces 3b and a pair of cutout surfaces 3c which is formed between both side edges of the arc outer circumferential surfaces 3b. As shown in FIG. 2A, each arc outer circumferential surface 3b has the same outer diameter as that of the outer circumferential surface 2f of the piston upper portion 2 and is flush with the outer circumferential surface 2f.

Meanwhile, as shown in FIG. 1, each cutout surface 3c includes two flat surfaces 3c1 and 3c2 which are recessed from the arc outer circumferential surface 3b and have a V shape. Further, a boss part 3d is formed, which swells outward in a radial direction of the piston 1 for an internal combustion engine from the two flat surfaces 3c1 and 3c2. As shown in FIGS. 2A and 2B, the boss part 3d swells radially inward of the piston 1 for an internal combustion engine also inside the skirt portion 3a. In a pair of boss parts 3d formed in this way, piston pin holes 3d1 into which a piston pin (not shown) is inserted are formed. The pair of piston pin holes 3d 1 has a common axis PCL. This axis PCL coincides with an axis of the inserted piston pin.

Further, an upper surface 3e of the piston lower portion 3 shown in FIGS. 4A and 4B is a joining surface which is joined to the lower surface 2c of the piston upper portion 2. In the upper surface 3e, an annular cooling channel 3f which forms the flow path together with the cooling channel 2d is formed. Moreover, in the upper surface 3e, an opening 3g connected to the recess 2e of the piston upper portion 2 is formed. The opening 3g has the same shape as that of an opening of the recess 2e and communicates with an internal space of the skirt portion 3a. In the opening 3g, a cross-sectional shape when viewed in the cross section shown in FIG. 4A and a cross-sectional shape when viewed in the cross section shown in FIG. 4B are different from each other, and width dimensions in the right-left direction orthogonal to the axis CL are different from each other.

As described above, the upper surface 3e and the lower surface 2c have the same shape as each other. Moreover, the upper surface 3e is frictionally joined to the lower surface 2c, and thus, a transition layer a (hereinafter, referred to as Fe-Al transition layer) is formed at a bold line position shown in FIGS. 2A and 2B.

In the piston 1 for an internal combustion engine having the above-described configuration, particularly, the piston upper portion 2 is exposed to a high temperature due to combustion inside the cylinder. Combustion efficiency of the piston 1 for an internal combustion engine is improved by performing high-temperature and high-compression combustion in a combustion chamber. Therefore, in order to increase the combustion efficiency, sufficient high-temperature fatigue strength of piston upper portion 2 is required.

However, since an aluminum alloy has low high-temperature fatigue strength, it is not possible to perform combustion in the combustion chamber at a high temperature and a high compression. Accordingly, steel having high-temperature fatigue strength is used for the piston upper portion 2. Specifically, the piston upper portion 2 is obtained by forming steel into a shape shown in FIGS. 2A, 3A, and 3B by casting, hot forging, or cold forging. As the steel to be used, SCM435 or SCM440 which is low-alloy steel can be suitably adopted.

However, if the piston lower portion 3 is formed of steel in addition to the piston upper portion 2, weight of the entire piston 1 for an internal combustion engine increases excessively. In this case, inertia weight when the piston 1 for an internal combustion engine moves up and down increases, and an energy loss increases. Therefore, the piston lower portion 3 is formed of an aluminum alloy. That is, by cold forging the aluminum alloy, the piston lower portion 3 having the shape as shown in FIGS. 4A and 4B is obtained. As the aluminum alloy, a general 4000 series can be suitably used.

After the piston upper portion 2 is formed of steel and the piston lower portion 3 is formed of the aluminum alloy, the piston lower portion 3 is joined to the piston upper portion 2, and thus, it is possible to obtain the piston 1 for an internal combustion engine having both the weight reduction and the high-temperature fatigue strength.

However, in a method in which an interface between the piston upper portion 2 formed of the steel and the piston lower portion 3 formed of the aluminum alloy is once melted and joined to each other, a brittle alloy layer formed of the steel and the aluminum alloy is thickly formed in a joining interface, and thus, joining strength between the piston upper portion 2 and the piston lower portion 3 cannot be maintained.

Therefore, it is conceivable to adopt friction stir joining (hereinafter simply referred to as friction welding), which is a solid-phase joining in which almost no alloy layer is formed on the joining interface. When the friction welding is performed, base materials of the steel and the aluminum alloy are not melted on the joining surface between the piston upper portion 2 and the piston lower portion 3, but both base materials are diffused to form a thin layer and thus, the piston upper portion 2 and the piston lower portion 3 are joined to each other. According to this method, a thick alloy layer is not generated on the joining surface, and high joining strength can be realized.

In order to perform solid-phase joining between the piston upper portion 2 and the piston lower portion 3 by the friction welding, first, the piston upper portion 2 is fixed, and subsequently, the piston lower portion 3 is pressed against the piston upper portion 2 while being rotated.

However, the 4000 series aluminum alloy used as the piston lower portion 3 has a problem that a melting point thereof is lower than those of other aluminum alloys and an oxide film of a surface is thick. In order to remove the oxide film, it is conceivable to increase a pressing force and a rotational speed during the friction welding. However, in this case, the aluminum alloy is heated to be partially melted, and thus, a thick Fe-Al transition layer is formed. The thick Fe-Al transition layer may significantly damage the joining strength between the piston upper portion 2 and the piston lower portion 3. Conversely, if the pressing force and the rotational speed during the friction welding are suppressed to avoid the formation of the thick Fe-Al transition layer, the oxide film cannot be completely removed, and as a result, sufficient joining strength cannot be obtained.

As described above, simply applying the friction welding of the related art does not provide the joining strength which can withstand in a practical use, and thus, is practically difficult to put into the practical use. As a result of diligent study in the above-described situation, the present inventors have obtained conditions regarding a thickness of the Fe-Al transition layer for obtaining optimum joining strength by the friction welding and an optimum manufacturing method for satisfying the conditions.

That is, as a result of repeated examinations, the present inventors found that if the thickness of the Fe-Al transition layer on the joining interface between the piston upper portion 2 and the piston lower portion 3 was less than 1.0 µm or more than 20.0 µm, the joining strength was lowered. Moreover, the "thickness of the Fe-Al transition layer" means a length along the axis CL until a concentration of the steel or the aluminum alloy in the joint portion of the piston upper portion 2 formed of the steel and the piston lower portion 3 formed of the aluminum alloy drops from 95% of the base material in mass% to 5%.

Specifically, if the thickness of the Fe-Al transition layer is less than 1.0 µm, the oxide film on the joining surface cannot be completely removed, and thus, the joining strength decreases. On the other hand, if the thickness of the Fe-Al transition layer is 20.0 µm or more, the Fe-Al transition layer is brittle and thus, brittle fracture easily occurs, and the joining strength decrease.

Meanwhile, if the thickness of the Fe-Al transition layer is within a range of 1.0 to 20.0 µm, the joining strength between the piston upper portion 2 and the piston lower portion 3 is significantly improved. Specifically, tensile strength in the joint portion between the piston upper portion 2 and the piston lower portion 3 is equal to or more than tensile strength (300 MPa or more) of the base material of the 4000 series aluminum alloy. Accordingly, when the joining strength of the joint portion is sufficiently high, in a case where a tensile load is applied to the piston 1 for an internal combustion engine, the piston lower portion 3 formed of the aluminum alloy having the tensile strength lower than those of the steel and the joint portion is broken. Therefore, breaking stress of the piston 1 for an internal combustion engine is mainly determined by the tensile strength of the piston lower portion 3. Meanwhile, when the joining strength of the joint portion is not sufficient, the joint portion is broken by the tensile load. In this case, the breaking stress of the piston 1 for an internal combustion engine is determined by the joining strength of the joint portion.

Moreover, the breaking stress of the piston 1 for an internal combustion engine was measured by the following procedure. The piston upper portion 2 side is fixed at a fixed position of a tensile test jig (not shown), a shaft body (not shown) is inserted into the piston pin hole 3d1 of the piston lower portion 3, and a jig for holding the shaft body is moved in a direction away from the piston upper portion 2 along the axis CL. In this way, the tensile load between the piston upper portion 2 and the piston lower portion 3 gradually increases, and a value obtained by dividing the tensile load when the break occurs by a joining area between the piston upper portion 2 and the piston lower portion 3 become the breaking stress.

A lower limit of the thickness of the Fe-Al transition layer is preferably 1.7 µm, more preferably 5.8 µm. Meanwhile, an upper limit of the thickness of the Fe-Al transition layer is preferably 19.8 µm, and more preferably 16.8 µm.

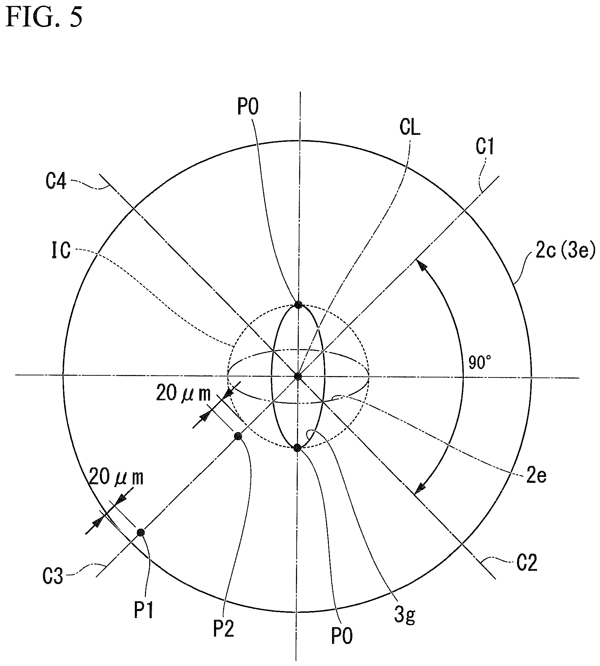

A method for measuring the thickness of the Fe-Al transition layer will be described with reference to FIG. 5. FIG. 5 is an explanatory view in which the joining surface (lower surface 2c) of the piston upper portion 2 of the piston 1 for an internal combustion engine and the joining surface (upper surface 3e) of the piston lower portion 3 thereof coaxially overlap each other.

First, the piston 1 for an internal combustion engine is cut into four cross sections C1 to C4 including the axis CL and is divided into four pieces. As the four cross sections C1 to C4, the cross sections are determined so as to be equiangular intervals (that is, 90° intervals) when viewed along a line of sight along the axis CL.

In each of the four cross sections Cl to C4, a line analysis by EPMA is performed, and a thickness from a point where an aluminum component is 95% to a point where the aluminum component is 5% is obtained. In this case, a beam diameter of the EPMA is 2 nm.

Moreover, the thicknesses of the Fe-Al transition layers of two cut cross sections joined to each other in one cross section are the same as each other, and thus, any one of the two cut cross sections is selected and the thickness is obtained. In addition, the number of measurement locations per cross section is a total of two points, one point on the outer circumferential side and one point on the inner circumferential side of the piston 1 for the internal combustion engine. Specific positions of the two points will be described with reference to FIG. 5.

For example, in an outer circumferential side in the cross section C3, the thickness is measured at a position P1 of 20 µm depth from the outer circumferential surface of the piston 1 for an internal combustion engine toward the inside in the radial direction. Moreover, in the inner circumferential side in the cross section C3, first, a point farthest from the central axis CL among points on the opening of the recess 2e and points on the opening 3g is determined. Then, a circle centered on the central axis CL with the determined point as a point on a circumference is defined. More specifically using FIG. 5, since the opening of the recess 2e and the opening 3g have the same shape as each other, first, attention is paid to the shape of the opening 3g. A point farthest from the central axis CL among the points on the opening 3g is P0. Therefore, a circle IC which includes the point P0 on the circumference and is centered on the central axis CL is defined. A position 20 µm away from an intersection of the circle IC and the cross section C3 radially outward is defined as a point P2.

The thickness of the Fe-Al transition layer is obtained at each of the points P1 and P2 obtained in this way. Similar measurement is performed in other cross sections C1, C2, and C4. As a result of measuring the thicknesses at two points in each of all the cross sections C1 to C4, a total of eight measurement results of four points on the outer circumferential side and four points on the inner circumferential side are obtained.

Subsequently, an average value of the thickness measurement values at the four points P1 on the outer circumferential side is obtained. Similarly, an average value of the thickness measurement values of the four points P2 on the inner circumferential side is obtained. If both the thickness average value on the outer circumferential side and the thickness average value on the inner circumferential side obtained in this way are within the above-described range of 1.0 to 20.0 µm, sufficient bond strength is secured.

The reason why the circle IC is used as a reference when the point P2 on the inner circumferential side is defined will be described.

In the friction welding, the joining surface (upper surface 3e) of the piston lower portion 3 is rotated while being pressed against the joining surface (lower surface 2c) of the piston upper portion 2. In this case, since both the recess 2e and the opening 3g are not circular, a portion which is subjected to or is not subjected to friction repeatedly according to the rotation of the piston lower portion 3 occurs on the inner circumferential sides of both the lower surface 2c and the upper surface 3e. The portion is located on the inner circumferential side from the circle IC in FIG. 5, and thus, in order to obtain strong friction welding, it is required to manage the thickness of the Fe-Al transition layer in an annular portion outside the circle IC. For these reasons, it is required to manage the thickness of the Fe-Al transition layer within the annular portion outside the circle IC, which can provide stable friction welding.

Moreover, it is also conceivable that both the recess 2e and the opening 3g are not present and each of the lower surface 2c and the upper surface 3e is a simple circular flat surface. However, in this case, since a circumferential speed of a central portion of the circular flat surface is slower than a circumferential speed of the outer circumferential portion, there is a concern that appropriate joining strength cannot be obtained. For this reason, it is preferable that the lower surface 2c and the upper surface 3e are substantially annular surfaces having an opened central portion.

Meanwhile, even in the annular portion, the inner circumferential side and the outer circumferential side have different circumferential speeds. Therefore, the thickness of the Fe-Al transition layer tends to be more easily thickened on the outer circumferential side having a faster circumferential speed than on the inner circumferential side having a slower circumferential speed.

When the friction welding of the piston lower portion 3 formed of the aluminum alloy is performed, it is necessary to remove the oxide film formed on the upper surface 3e and to set the thickness of the Fe-Al transition layer to an appropriate thickness. In particular, it is necessary to prevent the oxide film on the inner circumferential side of the annular portion from being insufficiently removed and the thickness of the Fe-Al transition layer from being insufficient. Therefore, it is also conceivable to simply increase at least one of the rotational speed and the pressing force (hereinafter, referred to as friction pressure) of the piston lower portion 3. However, in this case, there is a concern that the circumferential speed on the outer circumferential side of the annular portion increases too much, the temperature becomes higher than necessary, and the Fe-Al transition layer becomes too thick.

In the present embodiment, by adopting a manufacturing method described later with respect to this problem, the thickness of the Fe-Al transition layer is set such that a large difference does not occur between the inner circumferential side and the outer circumferential side of the annular portion to secure a uniform thickness distribution. Specifically, a difference obtained by subtracting the thickness on the inner circumferential side of the Fe-Al transition layer from the thickness on the outer circumferential side thereof is 10.0 µm or less. Therefore, the transition layer having high joining strength is formed in the entire annular portion, and sufficient coupling strength can be ensured in the entire joining surface.

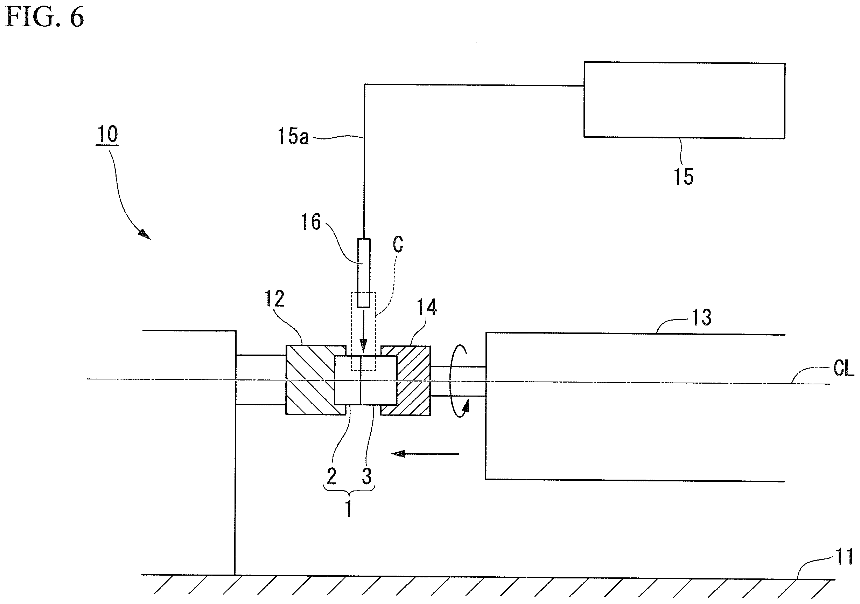

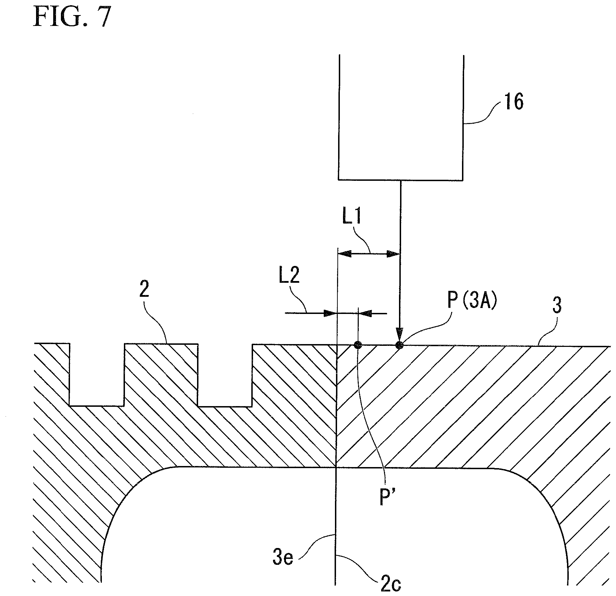

A manufacturing apparatus 10 of the piston 1 for an internal combustion engine according to the present embodiment is shown in FIG. 6. Moreover, FIG. 7 is an expanded cross-sectional view showing an A portion of FIG. 6.

As shown in FIG. 6, the manufacturing apparatus 10 includes a base 11, a fixed chuck 12 which is fixed to the base 11, a rotation driving unit 13 which is installed on the base 11, a rotary chuck 14 which is held by the rotation driving unit 13, an air supply source 15, a nozzle 16 which is connected to the air supply source 15 via a flexible pipe 15a, and a controller (not shown).

The fixed chuck 12 holds the piston upper portion 2 so that the central axis CL is horizontal and fixes the piston upper portion 2 in place.

The rotary chuck 14 holds the piston lower portion 3 coaxially with the piston upper portion 2.

The rotation driving unit 13 rotates the rotary chuck 14 around the central axis CL and moves the rotary chuck 14 close to and away from the fixed chuck 12. The rotation driving unit 13 includes a first measurement unit (not shown) that measures a rotational speed of the rotary chuck 14 and a second measurement unit (not shown) which measures the pressing force (friction pressure and upset pressure) of the rotary chuck 14.

As shown in FIGS. 6 and 7, the nozzle 16 blows compressed air, which is a cooling fluid supplied from the air supply source 15 via the flexible pipe 15a, to an outer lower surface 3A of the piston lower portion 3 at a position shifted to the piston lower portion 3 side by a predetermined distance from the joining surface (mating surfaces of lower surface 2c and the upper surface 3e) between the piston upper portion 2 and the piston lower portion 3. As this predetermined distance, for example, a position P of L1 = 2 mm from the joining surface toward the piston lower portion 3 is preferable. Although the nozzle 16 is fixed, the piston lower portion 3 rotates during friction heating, and thus, the outer circumferential surface of the piston lower portion 3 can be uniformly cooled in the circumferential direction within a belt-shaped cooling range including the position P. As the cooling fluid, a liquid such as water may be used instead of the compressed air.

The controller performs a drive control of the rotation driving unit 13 and an ON/OFF control of the blowing of the compressed air from the nozzle 16.

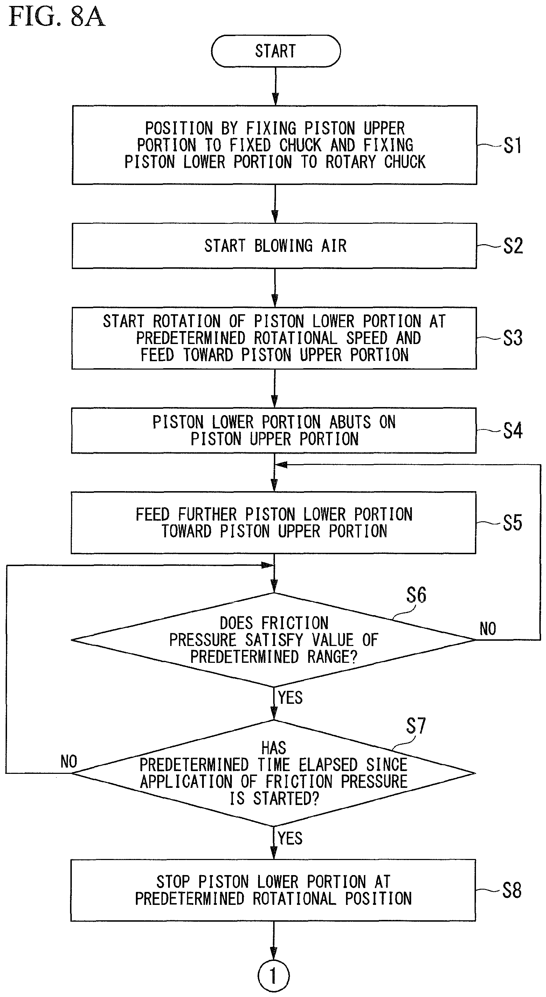

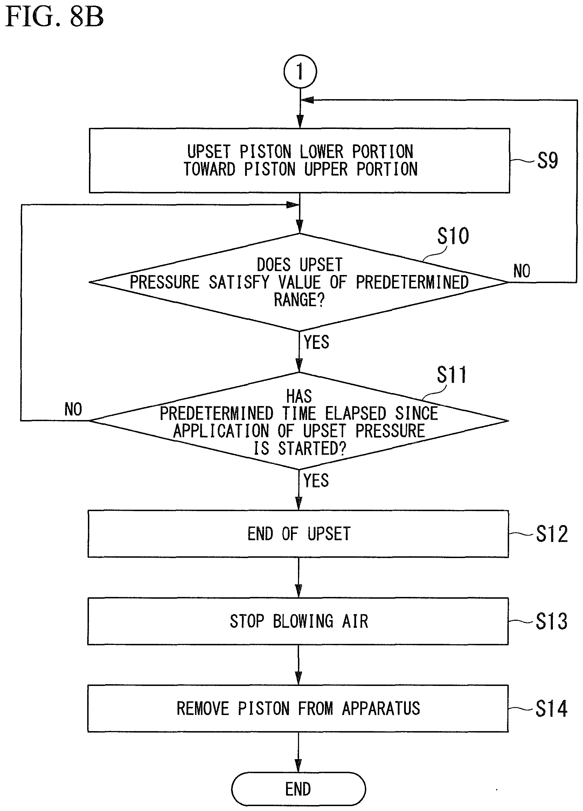

Subsequently, the manufacturing method of the piston 1 for an internal combustion engine using the manufacturing apparatus 10 will be described with reference to flowcharts of FIGS. 8A and 8B.

First, in Step S1, the piston upper portion 2 is fixed to the fixed chuck 12, and the piston lower portion 3 is fixed to the rotary chuck 14. Moreover, the recess 2e and the opening 3g are positioned in a rotation direction to correctly overlap each other.

In a subsequent Step S2, the controller drives the air supply source 15 to start forced cooling by which the compressed air is blown from the nozzle 16 only to the outer circumference side of the piston lower portion 3. Moreover, the compressed air is not blown to the inner circumferential side of the piston lower portion 3, and natural heat dissipation is performed.

In a subsequent Step S3, the rotation driving unit 13 which receives an instruction from the controller rotates the rotary chuck 14 which holds the piston lower portion 3. At that time, the first measurement unit measures the rotational speed of the rotary chuck 14 and performs a feedback control so as to obtain a predetermined rotational speed. After the rotational speed of the rotary chuck 14 is stabilized, the rotation driving unit 13 feeds the rotary chuck 14 toward the fixed chuck 12.

In a subsequent Step S4, the upper surface 3e of the piston lower portion 3 slightly abuts on the lower surface 2c of the piston upper portion 2, and the second measuring unit detects a reaction force at that time. Accordingly, it is determined that the piston upper portion 2 and the piston lower portion 3 are in coaxial contact with each other.

In a subsequent Step S5, the rotation driving unit 13 further presses the rotary chuck 14 toward the fixed chuck 12 so as to obtain a predetermined friction pressure while maintaining the rotation speed of the rotary chuck 14 at the predetermined rotational speed.

In a subsequent Step S6, the second measuring unit measures whether or not the friction pressure which is strength of the pressing force of the piston lower portion 3 with respect to the piston upper portion 2 is within a predetermined range. As a result of the measurement, if the friction pressure is insufficient (Step S6: NO), the process returns to Step S5 to further feed the piston lower portion 3. Meanwhile, if the friction force is appropriate (Step S6: YES), the process proceeds to Step S7 without further feeding.

In this manner, the upper surface 3e of the piston lower portion 3 comes into slide contact with the lower surface 2c of the piston upper portion 2 with a predetermined friction pressure while being rotated, and as a result, both the upper surface 3e and the lower surface 2c are heated by frictional heat. The oxide film covering the upper surface 3e of the piston lower portion 3 is removed by the frictional heat and the friction pressure. In addition, since the compressed air is continuously blown from Step S2, the outer circumferential side of the piston lower portion 3 continues to be cooled, and excessive heating can be prevented. As a result, the entire surface of the annular portion shown in FIG. 5 can be heated uniformly without causing a large difference in an amount of heating between the inner circumferential side and the outer circumferential side.

In a subsequent Step S7, it is determined whether or not a predetermined time elapses from the start of the application of the friction pressure. That is, the elapsed time from the abutment start in Step S4 to the present time is checked. As a result of the check, in a case where the predetermined application time has not yet been reached (Step S7: NO), the process returns to Step S6 and the friction pressure is controlled again. Meanwhile, as a result of the check, in a case where the predetermined application time has been reached (Step S7: YES), the process proceeds to Step S8.

Moreover, in Steps S5 to S7, the feedback control is performed by measuring the friction pressure. However, the present invention is not limited to this form. For example, a plurality of pistons 1 for an internal combustion engine are experimentally manufactured, and as a result, conditions of each of the rotational speed of the rotary chuck 14, an amount of feeding of the rotary chuck 14, and an application time of the friction pressure are obtained when an optimal result is obtained. Moreover, in the subsequent production of an actual product, a control by the control unit may be performed so as to satisfy the conditions.

In a subsequent Step S8, the rotation of the rotary chuck 14 stops. At this time, a relative rotational position of the piston lower portion 3 around the central axis CL with respect to the piston upper portion 2 is made to coincide with the rotational position positioned in Step S1. As a result, the piston lower portion 3 is positioned with respect to the piston upper portion 2 such that the recess 2e of the piston upper portion 2 and the opening 3g correctly overlap each other.

In a subsequent Step S9, the piston lower portion 3 held by the rotary chuck 14 is pressed against the piston upper portion 2 with a predetermined upset pressure. It is preferable that the upset pressure at this time is within a range of 2 to 10 times the friction pressure. When the upset pressure is less than 2 times the friction pressure, the Fe-Al transition layer is excessively formed and becomes too thick. In addition, the oxide film is not sufficiently removed, and the joining strength decreases. Meanwhile, the upset pressure is more than 10 times the friction pressure, the Fe-Al transition layer becomes too thin.

In a subsequent Step S10, the second measurement unit measures whether or not the upset pressure which is the strength of the pressing force of the piston lower portion 3 with respect to the piston upper portion 2 is within a predetermined range. As a result of the measurement, if the upset pressure is insufficient (Step S10: NO), the process returns to Step S9 and the piston lower portion 3 is fed. Meanwhile, if the upset pressure is appropriate (Step S10: YES), the process proceeds to Step S11 without further feeding.

In this way, the upper surface 3e of the piston lower portion 3 is completely solid-state welded to the lower surface 2c of the piston upper portion 2 to form a Fe-Al transition layer forming a joining layer having a predetermined thickness. This Fe-Al transition layer is extremely thin and has high joining strength as compared with a case where an aluminum alloy is melted and joined. In addition, as described above, the outer circumferential side of the annular portion is prevented from being excessively heated by the cooling, and thus, the outer circumferential side portion of the Fe-Al transition layer is prevented from being embrittled and broken.

Meanwhile, the circumferential differential speed on the inner circumferential side of the annular portion is slower than that of the outer circumferential side. Accordingly, in order to avoid a situation where the oxide layer covering the upper surface 3e of the piston lower portion 3 cannot be completely removed, a situation where the joining strength cannot be obtained due to insufficient the friction heating, or the like, it is possible to compensate by increasing the rotational speed of the piston lower portion 3. In this case, as described above, the outer circumferential side of the annular portion continues to be appropriately cooled, and thus, no problem occurs even if the rotational speed of the piston lower portion 3 is increased.

Moreover, in the present embodiment, the pressure control for appropriately managing the upset pressure in Step S 10 is adopted. However, the present invention is not limited to this configuration, and a displacement control may be employed. In this case, in Step S10, it is determined whether or not the amount of feeding of the rotary chuck 14 reaches a specified value. If it is determined that the amount of feeding is insufficient, the process returns to Step S9. If it is determined that the amount of feeding is sufficient, the process proceeds to Step S11.

In a subsequent Step S11, it is determined whether or not a predetermined time elapses from start of application of the upset pressure. That is, an elapsed time from the upset start in Step S9 to the present time is checked. As a result of the check, if the predetermined application time has not yet been reached (Step S11: NO), the process returns to Step S10 and the upset pressure is controlled again. Meanwhile, as a result of the check, when the predetermined application time has been reached (Step S11: YES), the process proceeds to Step S12 and the application of upset pressure is released.

In a subsequent Step S13, the controller stops the air supply source 15 and stops the blowing of the compressed air from the nozzle 16. In a subsequent Step S14, the piston 1 for an internal combustion engine is removed from the manufacturing apparatus 10 by releasing the fixing by the fixed chuck 12 and the rotary chuck 14. Thereafter, since burrs appear at the joint portions of the piston upper portion 2 and the piston lower portion 3, the burrs are removed by turning, and the manufacturing step ends.

In the manufacturing steps, the upper surface 3e of the piston lower portion 3 is frictionally heated in Steps S4 to S7. The 4000 series aluminum alloy, which is the material of the piston lower portion 3, has a low melting point. Accordingly, when the 4000 series aluminum alloy is excessively heated during the friction heating, the surface layer of the joining interface is melted. For this reason, it is necessary to remove the oxide film on the surface while suppressing an amount of heat generation.

If the rotational speed of the piston lower portion 3 during the friction heating is less than 1000 rpm, the oxide film is not sufficiently removed, and thus, the joining strength after the upset decreases. Therefore, the rotational speed during the friction heating is 1000 rpm or more, preferably 1032 rpm or more, and more preferably 1054 rpm or more.

Meanwhile, if the rotational speed during the friction heating exceeds 2500 rpm, the amount of heat generation increases, and the temperature of the joining interface increases. Accordingly, the transition layer after the upset becomes thick and the joining strength decreases. Therefore, the rotational speed during the friction heating is 2500 rpm or less, preferably 2493 rpm or less, and more preferably 2492 rpm or less.

If the pressing force during the friction heating shown in Steps S4 to S7 exceeds 20.0 MPa, the temperature of the joining interface increases, and thus, the Fe-Al transition layer after the upset becomes thick and the joining strength decreases. Therefore, the pressing force (friction pressure) during the friction heating is 20.0 MPa or less, preferably 19.4 MPa or less, more preferably 19.2 MPa or less. Meanwhile, an upper limit of the pressing force during the friction heating is 50.0 MPa, preferably 40.0 MPa, and more preferably 35.0 MPa.

If a pressing time during the friction heating is less than 10.0 seconds, the oxide film is not sufficiently removed, and thus, the joining strength decreases. Therefore, the pressing time during the friction heating is 10.0 seconds or more, preferably 10.3 seconds or more, and more preferably 15.9 seconds or more. Meanwhile, an upper limit of the pressing time during the friction heating is preferably 60.0 seconds, more preferably 50.0 seconds, and even more preferably 40.0 seconds.

Furthermore, if a temperature of the outer circumferential surface of the piston lower portion 3 at the joining surface position during the friction heating is less than 200°C, the thickness of the Fe-Al transition layer becomes less than 1.0 µm, and thus, there is a concern that the joining strength after the upset may decrease. In addition, if the temperature of the outer circumferential surface is higher than 550°C, the thickness of the Fe-Al transition layer exceeds 20.0 µm, and thus, there is a concern that the joining strength may be reduced due to embrittle.

Therefore, the temperature of the outer circumferential surface of the piston lower portion 3 is preferably 200°C to 550°C. A lower limit of the temperature of the outer circumferential surface is more preferably 231°C, and still more preferably 307°C. Moreover, an upper limit of the temperature of the outer circumferential surface is more preferably 510°C, and still preferably 500°C. In addition, the temperature of the outer circumferential surface can be measured using a radiation-type thermometer, and a maximum temperature can be adopted as a measured value.

In the present embodiment, the rotational speed and the friction pressure of the piston lower portion 3 increase such that the temperature on the inner longitudinal side of the annular portion, which has a slow circumferential speed, is also 200°C to 550°C. For this reason, the temperature on the outer circumferential side of the annular portion, which has a fast rotational speed, tends to be higher than the temperature on the inner circumferential side. In order to prevent this, in the present embodiment, the temperature of the outer circumferential surface of the piston lower portion 3 is suppressed to 200°C to 550°C by the blowing of the compressed air. As a result, the temperatures of both the inner circumferential side and the outer circumferential side of the annular portion are controlled within a temperature range of 200°C to 550°C.

In addition, a temperature difference between the inner circumferential side and the outer circumferential side of the annular portion does not occur. Accordingly, the Fe-Al transition layer can have a uniform thickness distribution such that a difference obtained by subtracting the thickness on the inner circumferential side from the thickness on the outer circumferential side of the Fe-Al transition layer serving as the joining layer is 10.0 µm or less. Therefore, it is possible to sufficiently increase the joining strength between the piston upper portion 2 and the piston lower portion 3.

According to the piston 1 for an internal combustion engine and the manufacturing method of the present embodiment described above, it is possible to obtain the piston 1 for an internal combustion engine which includes the piston upper portion 2 having the high heat resisting properties and the piston lower portion 3 having light weight and has the high joining strength between the piston upper portion 2 and the piston lower portion 3. The piston 1 for an internal combustion engine can be suitably used for an automotive engine, particularly a diesel engine or the like.

### [Examples]

The present invention will be described more specifically with reference to an example. The piston upper portion 2 shown in FIGS. 3A and 3B described above was manufactured using SCM435, and the piston lower portion 3 shown in FIGS. 4A and 4B was manufactured using an aluminum alloy of A4032. In addition, a piston 1 for an internal combustion engine was manufactured by frictionally joining the piston lower portion 3 to the piston upper portion 2. During the friction welding, by changing each condition of the rotational speed during the friction heating, the pressing force during the friction heating, the pressing time during the friction heating, and presence or absence of the forced air cooling, the temperature of the outer circumferential surface of the piston lower portion 3 immediately before the upset was measured. As shown in FIG. 7, the temperature of the outer circumferential surface was measured at a position P' of L2 = 2 mm from the joining surface toward the piston lower portion 3 using a radiation-type thermometer.

Moreover, by changing each condition of the pressing force and the pressing time during the upset, a thickness t1 on the outer circumferential side and a thickness t2 on the inner circumferential side of the Fe-Al transition layer obtained after the upset, a difference (t1 - t2) of the thicknesses, and a breaking stress were obtained.

The above results are summarized in Table 1.

Moreover, both the temperature of the outer circumferential surface of the piston lower portion 3 of the joining interface and the thickness of each portion of the Fe-Al transition layer were measured by the method described above. Moreover, in a case where a broken location was not the joining surface but the piston lower portion 3 in a tensile test, it was determined that the joining strength of the joining surface was sufficient. In a case where the broken location was the joining surface, it was determined that the joining strength of the joining surface was not sufficient.

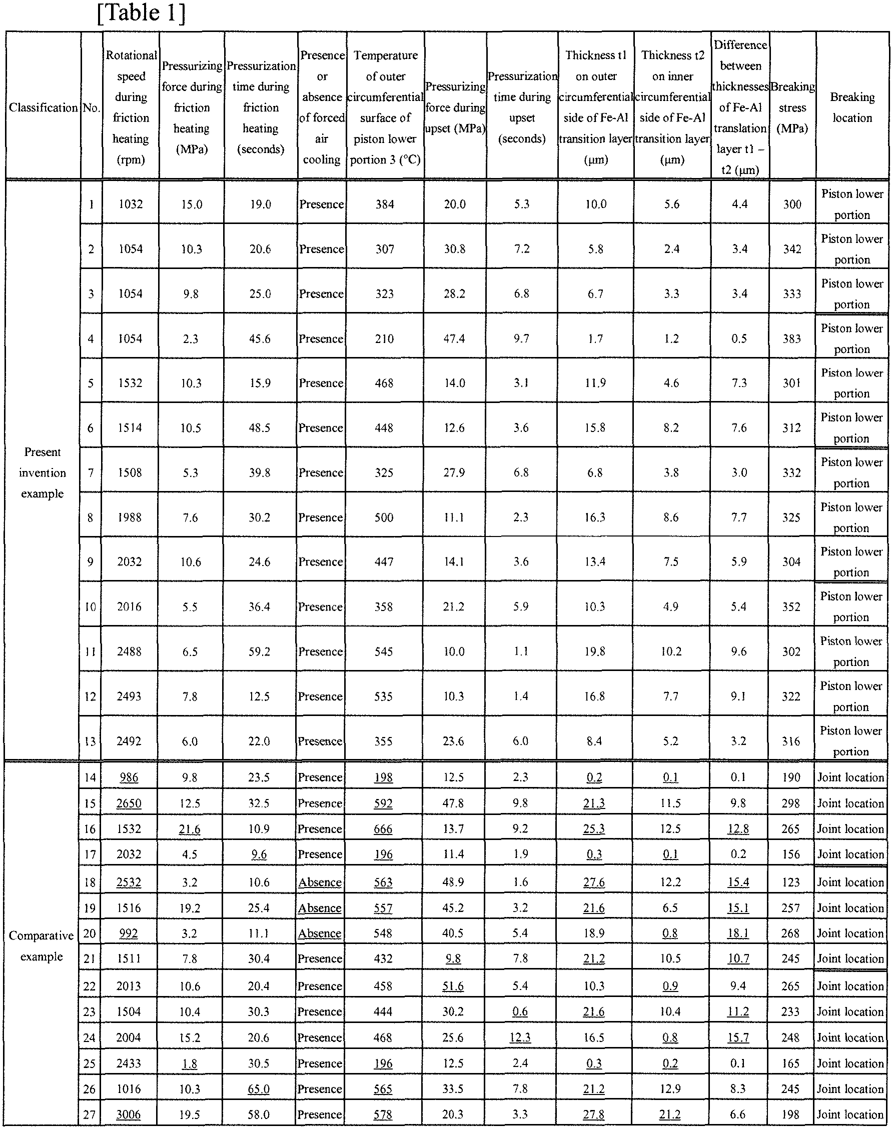

In Table 1, Nos. 1 to 13 are examples of the present invention which satisfy all the above-described conditions, and Nos. 14 to 27 are comparative examples which do not satisfy the above-described conditions. In Nos. 1 to 13 which are examples of the present invention, the thickness of the transition layer was within a range of 1.0 to 20.0 µm on both the inner circumferential side and the outer circumferential side, the breaking stress in the tensile test was as high as 300 MPa or more, and the breaking location was the piston lower portion other than the joining surface.

Meanwhile, in No. 14, the rotational speed during the friction heating was slower than the above-described lower limit, and thus, the temperature of the outer circumferential surface of the piston lower portion 3 was as low as 198°C. As a result, the thickness of the Fe-Al transition layer was as thin as 0.2 µm, and the breaking stress was as low as 190 MPa. In the tensile test, breaking occurred at the joint location.

Meanwhile, in No. 15, the rotational speed during the friction heating exceeded the above-described upper limit, and thus, the thickness of the Fe-Al transition layer was too thick as 21.3 µm, and the breaking stress was low as 298 MPa. In the tensile test, the breaking occurred at the joint location.

In No. 16, the pressing force during the friction heating exceeded the upper limit of the above-described range and the pressing force during the friction heating was higher than the pressing force during the upset. Accordingly, the thickness of the Fe-Al transition layer was as too thick as 25.3 µm, and the breaking stress was as low as 265 MPa. In the tensile test, the breaking occurred at the joint location.

In No. 17, the pressing time during the friction heating was below the lower limit of the above-described range, and thus, the temperature of the outer circumferential surface of the piston lower portion 3 was as low as 196°C. As a result, the thickness of the Fe-Al transition layer was as thin as 0.3 µm, and the breaking stress was as low as 156 MPa. In the tensile test, breaking occurred at the joint location.

In No. 18, the rotational speed was high during the friction heating, and the forced air cooling from the outside of the friction welding surface was not performed. Therefore, the temperature of the outer circumferential surface of the piston lower portion 3 was 563°C, the thickness of the Fe-Al transition layer was as too thick as 27.6 µm, and the breaking stress was as low as 123 MPa. In the tensile test, breaking occurred at the joint location.

In No. 19, conditions except for the condition in which forced air cooling was not performed were satisfied. However, the temperature of the outer circumferential surface temperature of piston lower portion 3 was increased to 557°C. As a result, the thickness of the Fe-Al transition layer was as too thick as 21.6 µm, and the breaking stress was as low as 257 MPa. In the tensile test, breaking occurred at the joint location.

In No. 20, although the thickness t1 on the outer circumferential side of the Fe-Al transition layer was appropriate, the thickness t2 on the inner circumferential side was too thin, and thus, sufficient joining strength was not obtained. In the present comparative example, the rotational speed during the friction heating was lowered to outside the appropriate range in order to appropriately set the thickness t1 on the outer circumferential side of the Fe-Al transition layer appropriate under a condition without the forced air cooling. However, it was presumed that the temperature on the inner circumferential side of the Fe-Al transition layer did not increase, and the thickness t2 of the inner circumferential side was thin. In the tensile test, breaking occurred at the joint location.

In No. 21, although the pressing time during the upset was appropriate, the pressing force was too low. Accordingly, the thickness t1 on the outer circumferential side of the Fe-Al transition layer was too thick, and as a result, sufficient joining strength was not obtained. That is, in the present comparative example, since the upset pressing force was too weak, an excess portion on the outer circumferential side of the Fe-Al transition layer could not be extruded, and the thickness t1 on the outer circumferential side of the Fe-Al transition layer was increased. As a result, in the tensile test, breaking occurred at the joint location.

In No. 22, although the pressing time during the upset was appropriate, the pressing force was too high. Accordingly, the thickness t2 on the inner circumferential side of the Fe-Al transition layer was too thin, and as a result, sufficient joining strength was not obtained. That is, in the present comparative example, since the pressing force during the upset was too strong, a portion on the inner circumferential side of the Fe-Al transition layer was excessively extruded, and the thickness t2 of the inner circumferential side was too thin. As a result, in the tensile test, breaking occurred at the joint location.

In No. 23, although the pressing force during the upset was appropriate, the pressing time was too short. Accordingly, the thickness t1 on the outer circumferential side of the Fe-Al transition layer was too thick, and as a result, sufficient joining strength was not obtained. That is, in the present comparative example, since the pressing time during the upset was too short, an excess portion on the outer circumferential side of the Fe-Al transition layer could not be extruded. Accordingly, the thickness t1 on the outer circumferential side of the Fe-Al transition layer was thick. As a result, in the tensile test, breaking occurred at the joint location.

In No. 24, although the pressing force during the upset was appropriate, the pressing time was too long. Accordingly, the thickness t2 on the inner circumferential side of the Fe-Al transition layer was too thin, and as a result, sufficient joining strength was not obtained. That is, in the present comparative example, since the pressing time during the upset was too long, a portion on the inner circumferential side of the Fe-Al transition layer was too much extruded. Accordingly, the thickness t2 on the inner circumferential side of the Fe-Al transition layer was thin. As a result, in the tensile test, breaking occurred at the joint location.

In No. 25, since the pressing force during the friction heating was too low, both the thickness t1 on the outer circumferential side and the thickness t2 on the inner circumferential side of the Fe-Al transition layer were too thin, and as a result, sufficient joining strength was not obtained. That is, in the present comparative example, since the pressing force during the friction heating is too weak, the temperature of the Fe-Al transition layer did not increase sufficiently, and both the thickness t1 on the outer circumferential side and the thickness t2 on the inner circumferential side of the Fe-Al transition layer were thin. As a result, in the tensile test, breaking occurred at the joint location.

In No. 26, since the pressing time during the friction heating was too long, the thickness t1 on the outer circumferential side of the Fe-Al transition layer was too thick, and as a result, sufficient joining strength was not obtained. That is, in the present comparative example, since the pressing time during the friction heating was too long, the temperature of the outer circumferential surface of the Fe-Al transition layer was too high, and the thickness t1 on the outer circumferential side of the Fe-Al transition layer was thick. As a result, in the tensile test, breaking occurred at the joint location.

In No. 27, since the rotational speed during the friction heating was too fast, both the thickness t1 on the outer circumferential side and the thickness t2 on the inner circumferential side of the Fe-Al transition layer were too thick, and as a result, sufficient joining strength was not obtained. That is, in the present comparative example, since the rotational speed during the friction heating was considerably fast, the temperature of the Fe-Al transition layer was too high, and both the thickness t1 on the outer circumferential side and the thickness t2 on the inner circumferential side of the Fe-Al transition layer were thick. As a result, in the tensile test, breaking occurred at the joint location.

From the above, by performing the forced air cooling and the above-described various conditions, it was confirmed that the piston 1 for an internal combustion engine including the steel piston upper portion 2 having excellent high-temperature durability and the aluminum alloy piston lower portion 3 and having the high joining strength between the piston upper portion 2 and the piston lower portion 3 could be obtained.

An outline of the piston 1 for an internal combustion engine of the present embodiment described above is summarized below.
(1) The piston 1 for an internal combustion engine of the present embodiment includes: the piston upper portion 2 which is formed of steel; and a piston lower portion 3 which is joined to the piston upper portion 2 via the annular Fe-Al joining layer and is formed of an aluminum alloy, in which the thickness of the Fe-Al joining layer is 1.0 µm to 20.0 µm on both an inner circumferential side and an outer circumferential side of the Fe-Al joining layer.
(2) The difference obtained by subtracting the thickness on the inner circumferential side from the thickness on the outer circumferential side of the joining layer is 10.0 µm or less.
(3) The manufacturing method of the piston 1 for an internal combustion engine of the present embodiment, includes: fixing the first part in place; performing friction heating by pressing the second part against the first part while rotating the second part; and pressing the second part against the first part after stopping the rotation of the second part to form the Fe-Al joining layer. Moreover, in the performing of the friction heating, the compressed air is blown to the outer circumferential surface of the piston lower portion 3 at the position on the piston lower portion 3 side from the joint position between the piston upper portion 2 and the piston lower portion 3.
(4) In the performing of the friction heating, the piston lower portion 3 is pressed against the piston upper portion 2 for 10.0 seconds to 60.0 seconds at the pressing force from 2.0 MPa to 20.0 MPa while rotating at the rotational speed of 1000 rpm to 2500 rpm. Moreover, in the forming of the Fe-Al joining layer, the piston lower portion 3 is pressed against the piston upper portion 2 for 1.0 second to 10.0 seconds at the pressing force which is 10.0 MPa to 50.0 MPa and is larger than the pressing force in the performing of the friction heating.
(5) In the performing of the friction heating, the temperature of the outer circumferential surface of the piston lower portion 3 is 200°C to 550°C.

### [Industrial Applicability]

According to the present invention, it is possible to provide a piston for an internal combustion engine having high durability and light weight and a manufacturing method thereof.

### [Brief Description of the Reference Symbols]

1: piston for internal combustion engine
2: piston upper portion (first part)
2c: lower surface (joining surface)
3: piston lower portion (second part)
3A: outer circumferential surface
3e: upper surface (joining surface)
a: joining layer, Fe-Al transition layer

## Claims

1. A piston (1) for an internal combustion engine, the piston comprising:
a first part (2) which is formed of steel; and
a second part (3) which is joined to the first part via an annular joining layer (a) and is formed of an aluminum alloy,
wherein a thickness of the joining layer is 1.0 µm to 20.0 µm on both an inner circumferential side and an outer circumferential side of the joining layer.

2. The piston for an internal combustion engine according to claim 1,
wherein a difference obtained by subtracting the thickness on the inner circumferential side from the thickness on the outer circumferential side of the joining layer is 10.0 µm or less.

3. A manufacturing method of the piston (1) for an internal combustion engine according to claim 1 or 2, the manufacturing method comprising:
fixing the first part in place;
performing friction heating by pressing the second part against the first part while rotating the second part; and
pressing the second part against the first part after stopping the rotation of the second part to form the joining layer,
wherein in the performing of the friction heating, a cooling fluid is supplied to an outer circumferential surface of the second part at a position on a side of the second part from a joint position between the first part and the second part.

4. The manufacturing method of the piston for an internal combustion engine according to claim 3,
wherein in the performing of the friction heating, the second part is pressed against the first part for 10.0 seconds to 60.0 seconds at a pressing force from 2.0 MPa to 20.0 MPa while rotating at a rotational speed of 1000 rpm to 2500 rpm, and
wherein in the forming of the joining layer, the second part is pressed against the first part for 1.0 second to 10.0 seconds at a pressing force which is 10.0 MPa to 50.0 MPa and is larger than the pressing force in the performing of the friction heating.

5. The manufacturing method of the piston for an internal combustion engine according to claim 3 or 4,
wherein in the performing of the friction heating, a temperature of the outer circumferential surface of the second part is 200°C to 550°C.

## Patentansprüche

1. Kolben (1) für einen Verbrennungsmotor, wobei der Kolben umfasst:
ein erstes Teil (2), das aus Stahl gebildet ist; und
ein zweites Teil (3), das über eine ringförmige Verbindungsschicht (a) mit dem ersten Teil verbunden ist und aus einer Aluminiumlegierung gebildet ist,
wobei eine Dicke der Verbindungsschicht 1,0 µm bis 20,0 µm sowohl auf einer inneren Umfangsseite als auch auf einer äußeren Umfangsseite der Verbindungsschicht beträgt.

2. Kolben für einen Verbrennungsmotor nach Anspruch 1, wobei eine Differenz, die durch Subtraktion der Dicke auf der inneren Umfangsseite von der Dicke auf der äußeren Umfangsseite der Verbindungsschicht erhalten wird, 10,0 µm oder weniger beträgt.

3. Verfahren zur Herstellung eines Kolbens (1) für einen Verbrennungsmotor nach Anspruch 1 oder 2, wobei das Herstellungsverfahren umfasst:
Fixieren des ersten Teils;
Durchführen einer Reibungserwärmung durch Anpressen des zweiten Teils gegen das erste Teil, während das zweite Teil gedreht wird; und
Anpressen des zweiten Teils gegen das erste Teil nach dem Anhalten der Drehung des zweiten Teils, um die Verbindungsschicht zu bilden,
wobei bei der Durchführung der Reibungserwärmung einer äußeren Umfangsfläche des zweiten Teils an einer Position auf einer Seite des zweiten Teils ein Kühlfluid ausgehend von einer Verbindungsposition zwischen dem ersten Teil und dem zweiten Teil zugeführt wird.

4. Verfahren zur Herstellung eines Kolbens für einen Verbrennungsmotor nach Anspruch 3,
wobei bei der Durchführung der Reibungserwärmung das zweite Teil für 10,0 Sekunden bis 60,0 Sekunden mit einer Anpresskraft von 2,0 MPa bis 20,0 MPa gegen das erste Teil gepresst wird, während es mit einer Rotationsgeschwindigkeit von 1000 U/min bis 2500 U/min gedreht wird, und
wobei bei der Bildung der Verbindungsschicht das zweite Teil gegen das erste Teil für 1,0 Sekunden bis 10,0 Sekunden mit einer Anpresskraft gepresst wird, die 10,0 MPa bis 50,0 MPa beträgt und größer ist als die Anpresskraft bei der Durchführung der Reibungserwärmung.

5. Verfahren zur Herstellung eines Kolbens für einen Verbrennungsmotor nach Anspruch 3 oder 4,
wobei bei der Durchführung der Reibungserwärmung eine Temperatur der äußeren Umfangsfläche des zweiten Teils 200°C bis 550°C beträgt.

## Revendications

1. Piston (1) pour un moteur à combustion interne, le piston comprenant :
une première partie (2), qui est formée d'acier ; et
une seconde partie (3), qui est reliée à la première partie par l'intermédiaire d'une couche de liaison annulaire (a) et est formée d'un alliage d'aluminium,
dans lequel une épaisseur de la couche de jonction va de 1,0 µm à 20,0 µm à la fois sur un côté circonférentiel intérieur et un côté circonférentiel extérieur de la couche de j onction.

2. Piston pour un moteur à combustion interne selon la revendication 1,
dans lequel une différence obtenue en soustrayant l'épaisseur sur le côté circonférentiel intérieur de l'épaisseur sur le côté circonférentiel extérieur de la couche de jonction est inférieure ou égale à 10,0 µm.

3. Procédé de fabrication du piston (1) pour un moteur à combustion interne selon la revendication 1 ou 2, le procédé de fabrication comprenant :
la fixation de la première partie en place ;
la réalisation d'un chauffage par friction en pressant la seconde partie contre la première partie tout en faisant tourner la seconde partie ; et
la pression de la seconde partie contre la première partie après l'arrêt de la rotation de la seconde partie pour former la couche de jonction,
dans lequel, lors de la réalisation du chauffage par friction, un fluide de refroidissement est fourni à une surface circonférentielle extérieure de la seconde partie sur une position sur un côté de la seconde partie à partir d'une position de jonction entre la première partie et la seconde partie.

4. Procédé de fabrication du piston pour un moteur à combustion interne selon la revendication 3,
dans lequel, lors de la réalisation du chauffage par friction, la seconde partie est pressée contre la première partie pendant 10,0 secondes à 60,0 secondes à une force de pression de 2,0 MPa à 20,0 MPa tout en tournant à une vitesse de rotation de 1000 tpm à 2500 tpm, et
dans lequel, lors de la formation de la couche de jonction, la seconde partie est pressée contre la première partie pendant 1,0 seconde à 10,0 secondes à une force de pression qui est de 10,0 MPa à 50,0 MPa et qui est supérieure à la force de pression lors de la réalisation du chauffage par friction.

5. Procédé de fabrication du piston pour un moteur à combustion interne selon la revendication 3 ou 4,
dans lequel, lors de la réalisation du chauffage par friction, une température de la surface circonférentielle extérieure de la seconde partie va de 200°C à 550°C.
